# EUROPEAN PATENT APPLICATION

(11) **EP 2 879 327 A1**
(43) Date of publication of application: **03.06.2015**
(21) Application number: 13881449.6
(22) Date of filing: 30.09.2013
(51) Int. Cl.: H04L 9/32, H04L 9/08

(54) **ENCRYPTION AND DECRYPTION PROCESSING METHOD, APPARATUS AND DEVICE**

(71) Applicant: Huawei Technologies Co., Ltd., Longgang District Shenzhen, Guangdong 518129 (CN)
(72) Inventor: SONG, Zhuo, Shenzhen Guangdong 518129 (CN)
(74) Representative: Haley, Stephen
(86) International application number: PCT/CN2013/084786
(87) International publication number: WO 2015/042981

(57) **Abstract**

Embodiments of the present invention provide an encryption and decryption processing method, apparatus, and device. The method includes: generating, by a device itself, a key pair, where the key pair includes a first key used for encryption and a second key used for decryption; storing, by the device, the key pair in a first storage space; performing, by the device, digest calculation on device running data to obtain a digest of the device running data, where the device running data is stored in a second storage space; and reading, by the device, the first key from the first storage space, and encrypting a digest of the device running data with the first key to obtain a first digital signature. The embodiments of the present invention can effectively reduce a possibility of key disclosure, thereby further improving security.

## Description

### TECHNICAL FIELD

Embodiments of the present invention relate to computer technologies, and in particular, to an encryption and decryption processing method, apparatus, and device.

### BACKGROUND

With continuous development of communications technologies, an existing device can implement a corresponding function by installing a software package. Specifically, at a manufacture stage of a device, device running data can be burnt into the device, where the device running data may be a software package that enables the device to have one or some running functions, or may be a configuration file that is used to describe a software package-related parameter. After the device is sold, a device user can enable the device to run the device running data, so that the device has a corresponding running function.

For the sake of preventing device running data from being tampered before being run or in a running process, in the prior art, a check manner is generally used to implement integrity protection for the device running data at the device manufacture stage. Specifically, a device vendor can provide a pair of keys, including an encryption key and a decryption key. That is to say, the device vendor can generate a key pair beforehand with a special apparatus, where the key pair is the same for all devices. After the key pair is generated, the special apparatus can transmit the key pair to the device. At the manufacture stage, the device can implement integrity protection for the device running data with the encryption key transmitted by the special apparatus, and store the decryption key in the device. After the device is sold, when the device is started for the first time, or the device is powered on again, or the device is running, the device user can check the device running data with the decryption key provided by the device vendor, so as to determine whether the device running data is tampered.

In the prior art, however, both the encryption key and the decryption key are provided by the device vendor, and security is not high.

### SUMMARY

Embodiments of the present invention provide an encryption and decryption processing method, apparatus, and device.

According to a first aspect, an embodiment of the present invention provides an encryption and decryption processing method, including:
generating, by a device itself, a key pair, where the key pair includes a first key used for encryption and a second key used for decryption;
storing, by the device, the key pair in a first storage space which is in the device and does not provide external access;
performing, by the device, digest calculation on device running data to obtain a digest of the device running data, where the device running data is stored in a second storage space of the device; and
reading, by the device, the first key from the first storage space, and encrypting the digest of the device running data with the first key to obtain a first digital signature.

With reference to the first aspect, in a first implementation manner, the method further includes:
storing, by the device, the first digital signature in the second storage space.

With reference to the first aspect and the first implementation manner of the first aspect, in a second implementation manner, the generating, by a device itself, a key pair includes:
generating, by the device, the key pair automatically according to at least one of key seeds, where
the key seed includes:
   an electronic serial number ESN, a random number generated by the device itself, and current system time.

With reference to the first aspect, the first implementation manner of the first aspect, and the second implementation manner of the first aspect, in a third implementation manner, the first storage space includes any one of the following items:
a first-type storage space, a second-type storage space, and a third-type storage space,
where the first-type storage space is a storage space that is hidden to a device other than the device;
the second-type storage space is an internal storage space of a secure chip; and
the third-type storage space is a storage space of a write-once dedicated component that disallows modification of data after the data is written.

With reference to the first aspect, the first implementation manner of the first aspect, the second implementation manner of the first aspect, and the third implementation manner of the first aspect, in a fourth implementation manner, after the encrypting the digest of the device running data with the first key to obtain a first digital signature, the method further includes:
reading, by the device, the device running data and the first digital signature from the second storage space; and
performing, by the device, digest calculation on the device running data to obtain the digest of the read device running data, reading the second key from the first storage space, and decrypting the first digital signature with the second key to obtain a decrypted digest.

With reference to the fourth implementation manner of the first aspect, in a fifth implementation manner, after the decrypting the first digital signature with the second key to obtain a decrypted digest, the method further includes:
determining, by the device, whether the digest of the read device running data is consistent with the decrypted digest; and
if the digest of the read device running data is consistent with the decrypted digest, determining, by the device, that the device running data is not tampered.

With reference to the fourth implementation manner of the first aspect, in a sixth implementation manner, after the decrypting the first digital signature with the second key to obtain a decrypted digest, the method further includes:
determining, by the device, whether the digest of the read device running data is consistent with the decrypted digest; and
if the digest of the read device running data is inconsistent with the decrypted digest, determining, by the device, that the device running data is tampered.

With reference to the first aspect and the first to the sixth implementation manners of the first aspect, in a seventh implementation manner, after the storing the key pair in a first storage space which is in the device and does not provide external access, the method further includes:
downloading, by the device, upgrade data from an upgrade platform, and storing the upgrade data in the second storage space;
performing, by the device, digest calculation on the upgrade data to obtain a digest of the upgrade data; and
reading, by the device, the first key from the first storage space, and encrypting the digest of the upgrade data with first key to obtain a second digital signature.

With reference to the seventh implementation manner of the first aspect, in an eighth implementation manner, after the encrypting the digest of the upgrade data with first key to obtain a second digital signature, the method further includes:
storing, by the device, the second digital signature in the second storage space.

With reference to the seventh implementation manner and the eighth implementation manner of the first aspect, in a ninth implementation manner, after the encrypting the digest of the upgrade data with first key to obtain a second digital signature, the method further includes:
reading, by the device, the upgrade data and the second digital signature from the second storage space; and
performing, by the device, digest calculation on the upgrade data to obtain the digest of the read upgrade data, reading the second key from the first storage space, and decrypting the second digital signature with the second key to obtain a decrypted digest.

With reference to the ninth implementation manner of the first aspect, in a tenth implementation manner, after the decrypting the second digital signature with the second key to obtain a decrypted digest, the method further includes:
determining, by the device, whether the digest of the read upgrade data is consistent with the decrypted digest; and
if the digest of the read upgrade data is consistent with the decrypted digest, determining, by the device, that the upgrade data is not tampered.

With reference to the ninth implementation manner of the first aspect, in an eleventh implementation manner, after the decrypting the second digital signature with the second key to obtain a decrypted digest, the method further includes:
determining, by the device, whether the digest of the read upgrade data is consistent with the decrypted digest; and
if the digest of the read upgrade data is inconsistent with the decrypted digest, determining, by the device, that the upgrade data is tampered.

With reference to the first aspect and the first to the eleventh implementation manners of the first aspect, in a twelfth implementation manner, the first key and the second key are a symmetric key pair or an asymmetric key pair.

With reference to the first aspect and the first to the twelfth implementation manners of the first aspect, in a thirteenth implementation manner, the device running data includes a software package and/or a configuration file.

With reference to the seventh to the twelfth implementation manners of the first aspect, in a fourteenth implementation manner, the upgrade data includes a software package and/or a configuration file.

According to a second aspect, an embodiment of the present invention provides a decryption processing method, where: a device includes a first storage space and a second storage space; the first storage space is a space that does not provide external access;
the first storage space is used to store a key pair, where the key pair is generated by the device itself, and the key pair includes a first key used for encryption and a second key used for decryption;
the second storage space is used to store data and a digital signature, where the data includes device running data, and the digital signature includes a first digital signature which is obtained by the device by encrypting a digest of the device running data with the first key; and
the method includes:
reading, by the device, the device running data and the first digital signature from the second storage space;
performing, by the device, digest calculation on the device running data to obtain a digest of the device running data; and
reading, by the device, the second key from the first storage space, and decrypting the first digital signature with the second key to obtain a decrypted digest.

With reference to the second aspect, in a first implementation manner of the second aspect, after the decrypting the first digital signature with the second key to obtain a decrypted digest, the method further includes:
determining, by the device, whether the digest of the device running data is consistent with the decrypted digest; and
if the digest of the device running data is consistent with the decrypted digest, determining, by the device, that the device running data is not tampered.

With reference to the second aspect, in a second implementation manner of the second aspect, after the decrypting the first digital signature with the second key to obtain a decrypted digest, the method further includes:
determining, by the device, whether the digest of the device running data is consistent with the decrypted digest; and
if the digest of the device running data is inconsistent with the decrypted digest, determining, by the device, that the device running data is tampered.

With reference to the second aspect, the first implementation manner of the second aspect, and the second implementation manner of the second aspect, in a third implementation manner, the data further includes upgrade data downloaded from an upgrade platform; the digital signature further includes a second digital signature; and the method further includes:
reading, by the device, the upgrade data and the second digital signature from the second storage space, where the second digital signature is obtained by the device by encrypting a digest of the upgrade data with the first key; and
performing, by the device, digest calculation on the upgrade data to obtain the digest of the read upgrade data, reading the second key from the first storage space, and decrypting the second digital signature with the second key to obtain a decrypted digest.

With reference to the third implementation manner of the second aspect, in a fourth implementation manner, after the decrypting the second digital signature with the second key to obtain a decrypted digest, the method further includes:
determining, by the device, whether the digest of the read upgrade data is consistent with the decrypted digest; and
if the digest of the read upgrade data is consistent with the decrypted digest, determining, by the device, that the upgrade data is not tampered.

With reference to the third implementation manner of the second aspect, in a fifth implementation manner, after the decrypting the second digital signature with the second key to obtain a decrypted digest, the method further includes:
determining whether the digest of the read upgrade data is consistent with the decrypted digest; and
if the digest of the read upgrade data is inconsistent with the decrypted digest, determining, by the device, that the upgrade data is tampered.

With reference to the second aspect and the first to the fifth implementation manners of the second aspect, in a sixth implementation manner, the first storage space includes any one of the following items:
a first-type storage space, a second-type storage space, and a third-type storage space,
where the first-type storage space is a storage space that is hidden to a device other than the device;
the second-type storage space is an internal storage space of a secure chip; and
the third-type storage space is a storage space of a write-once dedicated component that disallows modification of data after the data is written.

With reference to the second aspect and the first to the sixth implementation manners of the second aspect, in a seventh implementation manner, the device running data includes a software package and/or a configuration file.

With reference to the third to the sixth implementation manners of the second aspect, in an eighth implementation manner, the upgrade data includes a software package and/or a configuration file.

According to a third aspect, an embodiment of the present invention provides an encryption processing apparatus, where the encryption processing apparatus is disposed in a device and includes:
a generating unit, configured to generate a key pair by itself, where the key pair includes a first key used for encryption and a second key used for decryption, and store the key pair in a first storage space which is in the device and does not provide external access;
a digest acquiring unit, configured to perform digest calculation on device running data to obtain a digest of the device running data, where the device running data is stored in a second storage space of the device; and
an encrypting unit, configured to read the first key from the first storage space, and encrypt the digest of the device running data with the first key to obtain a first digital signature.

With reference to the third aspect, in a first implementation manner, the encrypting unit is further configured to:
store the first digital signature in the second storage space.

With reference to the third aspect and the first implementation manner of the third aspect, in a second implementation manner, the generating unit is specifically configured to:
generate the key pair automatically according to at least one of key seeds, where the key seed includes:
   an electronic serial number ESN, a random number generated by the device itself, and current system time.

With reference to the third aspect, the first implementation manner of the third aspect, and the second implementation manner of the third aspect, in a third implementation manner, the first storage space includes any one of the following items:
a first-type storage space, a second-type storage space, and a third-type storage space,
where the first-type storage space is a storage space that is hidden to a device other than the device;
the second-type storage space is an internal storage space of a secure chip; and
the third-type storage space is a storage space of a write-once dedicated component that disallows modification of data after the data is written.

With reference to the third aspect, the first implementation manner of the third aspect, the second implementation manner of the third aspect, and the third implementation manner of the third aspect, in a fourth implementation manner, the apparatus further includes:
a decrypting unit, configured to read the device running data and the first digital signature from the second storage space; perform digest calculation on the device running data to obtain a digest of the read device running data; and read the second key from the first storage space, and decrypt the first digital signature with the second key to obtain a decrypted digest.

With reference to the fourth implementation manner of the third aspect, in a fifth implementation manner, the apparatus further includes:
a check processing unit, configured to determine whether the digest of the read device running data is consistent with the decrypted digest, where if the digest of the read device running data is consistent with the decrypted digest, the device determines that the device running data is not tampered.

With reference to the fourth implementation manner of the third aspect, in a sixth implementation manner, the apparatus further includes:
a check processing unit, configured to determine whether the digest of the read device running data is consistent with the decrypted digest, where if the digest of the read device running data is inconsistent with the decrypted digest, the device determines that the device running data is tampered.

With reference to the third aspect and the first to the sixth implementation manners of the third aspect, in a seventh implementation manner, the generating unit is further configured to download upgrade data from an upgrade platform, and store the upgrade data in the second storage space;
the digest acquiring unit is further configured to perform digest calculation on the upgrade data to obtain a digest of the upgrade data; and
the encrypting unit is further configured to read the first key from the first storage space, and encrypt the digest of the upgrade data with the first key to obtain a second digital signature.

With reference to the seventh implementation manner of the third aspect, in an eighth implementation manner, the encrypting unit is further configured to store the second digital signature in the second storage space.

With reference to the seventh implementation manner and the eighth implementation manner of the third aspect, in a ninth implementation manner, the decrypting unit is further configured to:
read the upgrade data and the second digital signature from the second storage space, perform digest calculation on the upgrade data to obtain a digest of the read upgrade data, read the second key from the first storage space, and decrypt the second digital signature with the second key to obtain a decrypted digest.

With reference to the ninth implementation manner of the third aspect, in a tenth implementation manner, the check processing unit is further configured to:
determine whether the digest of the read upgrade data is consistent with the decrypted digest, where
if the digest of the read upgrade data is consistent with the decrypted digest, the device determines that the upgrade data is not tampered.

With reference to the ninth implementation manner of the third aspect, in an eleventh implementation manner, the check processing unit is further configured to:
determine whether the digest of the read upgrade data is consistent with the decrypted digest, where
if the digest of the read upgrade data is inconsistent with the decrypted digest, the device determines that the upgrade data is tampered.

With reference to the third aspect and the first to the eleventh implementation manners of the third aspect, in a twelfth implementation manner, the first key and the second key are a symmetric key pair or an asymmetric key pair.

With reference to the third aspect and the first to the twelfth implementation manners of the third aspect, in a thirteenth implementation manner, the device running data includes a software package and/or a configuration file.

With reference to the seventh to the twelfth implementation manners of the third aspect, in a fourteenth implementation manner, the upgrade data includes a software package and/or a configuration file.

According to a fourth aspect, an embodiment of the present invention provides a decryption processing apparatus, where: the decryption processing apparatus is disposed in a device; the device includes a first storage space and a second storage space; the first storage space is a space that does not provide external access;
the first storage space is used to store a key pair, where the key pair is generated by the device itself, and the key pair includes a first key used for encryption and a second key used for decryption;
the second storage space is used to store data and a digital signature, where the data includes device running data, and the digital signature includes a first digital signature which is obtained by the device by encrypting a digest of the device running data with the first key; and
the apparatus includes:
a reading unit, configured to read the device running data and the first digital signature from the second storage space;
a digest acquiring unit, configured to perform digest calculation on the device running data to obtain a digest of the device running data; and
a decrypting unit, configured to read the second key from the first storage space, and decrypt the first digital signature with the second key to obtain a decrypted digest.

With reference to the fourth aspect, in a first implementation manner of the fourth aspect, the apparatus further includes: a check processing unit, configured to:
determine whether the digest of the device running data is consistent with the decrypted digest; and
if the digest of the device running data is consistent with the decrypted digest, determine that the device running data is not tampered.

With reference to the fourth aspect, in a second implementation manner of the fourth aspect, the apparatus further includes: a check processing unit, configured to:
determine whether the digest of the device running data is consistent with the decrypted digest; and
if the digest of the device running data is inconsistent with the decrypted digest, determine that the device running data is tampered.

With reference to the fourth aspect, the first implementation manner of the fourth aspect, and the second implementation manner of the fourth aspect, in a third implementation manner, the data further includes upgrade data downloaded from an upgrade platform; the digital signature further includes a second digital signature;
the reading unit is further configured to read the upgrade data and the second digital signature from the second storage space, where the second digital signature is obtained by the device by encrypting a digest of the upgrade data with the first key;
the digest acquiring unit is further configured to perform digest calculation on the upgrade data to obtain the digest of the read upgrade data; and
the decrypting unit is further configured to read the second key from the first storage space, and decrypt the second digital signature with the second key to obtain a decrypted digest.

With reference to the third implementation manner of the fourth aspect, in a fourth implementation manner, the check processing unit is further configured to:
determine whether the digest of the read upgrade data is consistent with the decrypted digest; and
if the digest of the read upgrade data is consistent with the decrypted digest, determine that the upgrade data is not tampered.

With reference to the third implementation manner of the fourth aspect, in a fifth implementation manner, the check processing unit is further configured to:
determine whether the digest of the read upgrade data is consistent with the decrypted digest; and
if the digest of the read upgrade data is inconsistent with the decrypted digest, determine that the upgrade data is tampered.

With reference to the fourth aspect and the first to the fifth implementation manners of the fourth aspect, in a sixth implementation manner, the first storage space includes any one of the following items:
a first-type storage space, a second-type storage space, and a third-type storage space,
where the first-type storage space is a storage space that is hidden to a device other than the device;
the second-type storage space is an internal storage space of a secure chip; and
the third-type storage space is a storage space of a write-once dedicated component that disallows modification of data after the data is written.

According to a fifth aspect, an embodiment of the present invention provides a device, including a processor and a storage, where: the storage includes a first storage space and a second storage space, where the first storage space is a storage space that does not provide external access; and
the processor is configured to: generate a key pair by itself, where the key pair includes a first key used for encryption and a second key used for decryption; store the key pair in the first storage space; perform digest calculation on device running data to obtain a digest of the device running data, where the device running data is stored in the second storage space; read the first key from the first storage space; and encrypt the digest of the device running data with the first key to obtain a first digital signature.

With reference to a fifth aspect, in a first implementation manner, the processor is further configured to store the first digital signature in the second storage space.

With reference to the fifth aspect and the first implementation manner of the fifth aspect, in a second implementation manner, the processor is specifically configured to:
generate the key pair automatically according to at least one of key seeds, where the key seed includes:
an electronic serial number ESN, a random number generated by the device itself, and current system time.

With reference to the fifth aspect, the first implementation manner of the fifth aspect, and the second implementation manner of the fifth aspect, in a third implementation manner, the first storage space includes any one of the following items:
a first-type storage space, a second-type storage space, and a third-type storage space,
where the first-type storage space is a storage space that is hidden to a device other than the device;
the second-type storage space is an internal storage space of a secure chip; and
the third-type storage space is a storage space of a write-once dedicated component that disallows modification of data after the data is written.

With reference to the fifth aspect, the first implementation manner of the fifth aspect, the second implementation manner of the fifth aspect, and the third implementation manner of the fifth aspect, in a fourth implementation manner, the processor is further configured to:
read the device running data and the first digital signature from the second storage space; and
perform digest calculation on the device running data to obtain the digest of the read device running data, read the second key from the first storage space, and decrypt the first digital signature with the second key to obtain a decrypted digest.

With reference to the fourth implementation manner of the fifth aspect, in a fifth implementation manner, the processor is further configured to:
determine whether the digest of the read device running data is consistent with the decrypted digest; and
if the digest of the read device running data is consistent with the decrypted digest, determine that the device running data is not tampered.

With reference to the fourth implementation manner of the fifth aspect, in a sixth implementation manner, the processor is further configured to:
determine whether the digest of the read device running data is consistent with the decrypted digest; and
if the digest of the read device running data is inconsistent with the decrypted digest, determine that the device running data is tampered.

With reference to the fifth aspect and the first to the sixth implementation manners of the fifth aspect, in a seventh implementation manner, the processor is further configured to:
download upgrade data from an upgrade platform, and store the upgrade data in the second storage space;
perform digest calculation on the upgrade data to obtain a digest of the upgrade data; and
read the first key from the first storage space, and encrypt the digest of the upgrade data with the first key to obtain a second digital signature.

With reference to the seventh implementation manner of the fifth aspect, in an eighth implementation manner, the processor is further configured to:
store the second digital signature in the second storage space.

With reference to the seventh implementation manner and the eighth implementation manner of the fifth aspect, in a ninth implementation manner, the processor is further configured to:
read the upgrade data and the second digital signature from the second storage space; and
perform digest calculation on the upgrade data to obtain the digest of the read upgrade data, read the second key from the first storage space, and decrypt the second digital signature with the second key to obtain a decrypted digest.

With reference to the ninth implementation manner of the fifth aspect, in a tenth implementation manner, the processor is further configured to:
determine whether the digest of the read upgrade data is consistent with the decrypted digest; and
if the digest of the read upgrade data is consistent with the decrypted digest, determine that the upgrade data is not tampered.

With reference to the ninth implementation manner of the fifth aspect, in an eleventh implementation manner, the processor is further configured to:
determine whether the digest of the read upgrade data is consistent with the decrypted digest; and
if the digest of the read upgrade data is inconsistent with the decrypted digest, determine that the upgrade data is tampered.

With reference to the fifth aspect and the first to the eleventh implementation manners of the fifth aspect, in a twelfth implementation manner, the first key and the second key are a symmetric key pair or an asymmetric key pair.

With reference to the fifth aspect and the first to the twelfth implementation manners of the fifth aspect, in a thirteenth implementation manner, the device running data includes a software package and/or a configuration file.

With reference to the seventh to the twelfth implementation manners of the fifth aspect, in a fourteenth implementation manner, the upgrade data includes a software package and/or a configuration file.

According to a sixth aspect, an embodiment of the present invention provides a device, including a processor and a storage, where: the storage includes a first storage space and a second storage space, where the first storage space is a storage space that does not provide external access;
the first storage space is used to store a key pair, where the key pair is generated by the device itself, and the key pair includes a first key used for encryption and a second key used for decryption; and
the second storage space is used to store data and a digital signature, where the data includes device running data, and the digital signature includes a first digital signature which is obtained by the device by encrypting a digest of the device running data with the first key; and
the processor is configured to read the device running data and the first digital signature from the second storage space, perform digest calculation on the device running data to obtain a digest of the device running data, read the second key from the first storage space, and decrypt the first digital signature with the second key to obtain a decrypted digest.

With reference to the sixth aspect, in a first implementation manner of the sixth aspect, the processor is further configured to:
determine whether the digest of the device running data is consistent with the decrypted digest; and
if the digest of the device running data is consistent with the decrypted digest, determine that the device running data is not tampered.

With reference to the sixth aspect, in a second implementation manner of the sixth aspect, the processor is further configured to:
determine whether the digest of the device running data is consistent with the decrypted digest; and
if the digest of the device running data is inconsistent with the decrypted digest, determine that the device running data is tampered.

With reference to the sixth aspect, the first implementation manner of the sixth aspect, and the second implementation manner of the sixth aspect, in a third implementation manner, the data further includes upgrade data downloaded from an upgrade platform; the digital signature further includes a second digital signature; and the processor is further configured to:
read the upgrade data and the second digital signature from the second storage space, where the second digital signature is obtained by the device by encrypting a digest of the upgrade data with the first key; and
perform digest calculation on the upgrade data to obtain the digest of the read upgrade data, read the second key from the first storage space, and decrypt the second digital signature with the second key to obtain a decrypted digest.

With reference to the third implementation manner of the sixth aspect, in a fourth implementation manner, the processor is further configured to:
determine whether the digest of the read upgrade data is consistent with the decrypted digest; and
if the digest of the read upgrade data is consistent with the decrypted digest, determine that the upgrade data is not tampered.

With reference to the third implementation manner of the sixth aspect, in a fifth implementation manner, the processor is further configured to:
determine whether the digest of the read upgrade data is consistent with the decrypted digest; and
if the digest of the read upgrade data is inconsistent with the decrypted digest, determine that the upgrade data is tampered.

With reference to the sixth aspect and the first to the fifth implementation manners of the sixth aspect, in a sixth implementation manner, the first storage space includes any one of the following items:
a first-type storage space, a second-type storage space, and a third-type storage space,
where the first-type storage space is a storage space that is hidden to a device other than the device;
the second-type storage space is an internal storage space of a secure chip; and
the third-type storage space is a storage space of a write-once dedicated component that disallows modification of data after the data is written.

With reference to the sixth aspect and the first to the seventh implementation manners of the sixth aspect, in an eighth implementation manner, the device running data includes a software package and/or a configuration file.

With reference to the third to the seventh implementation manners of the sixth aspect, in a ninth implementation manner, the upgrade data includes a software package and/or a configuration file.

In the embodiments of the present invention, a first key and a second key are a key pair generated by a device itself. At a manufacture stage, the device can implement, with the first key, integrity protection for device running data; and at a usage stage, the device can check, with the second key, whether the device running data is tampered, where the first key is used for encryption and the second key is used for decryption. Because both the first key and the second key are generated by the device itself, and the key pair is stored in a first storage space which is in the device and does not provide external access, the key pair is not transmitted outside the device, which can effectively reduce a possibility of key disclosure. In addition, the key pair is not provided by a device vendor, which can improve credibility of the device.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show some embodiments of the present invention, and persons of ordinary skill in the art may still derive other drawings according to these accompanying drawings without creative efforts.
FIG. 1 is a flowchart of Embodiment 1 of an encryption processing method according to the present invention;
FIG. 2 is a flowchart of Embodiment 2 of an encryption processing method according to the present invention;
FIG. 3 is a schematic flowchart of Embodiment 1 of a decryption processing method according to the present invention;
FIG. 4 is a schematic flowchart of Embodiment 2 of a decryption processing method according to the present invention;
FIG. 5 is a schematic structural diagram of an embodiment of an encryption processing apparatus according to the present invention;
FIG. 6 is a schematic structural diagram of an embodiment of a decryption processing apparatus according to the present invention; and
FIG. 7 is a schematic structural diagram of an embodiment of a device according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

A device described in the following embodiments of the present invention may be, for example, a user equipment (User Equipment, UE for short hereinafter), a base station, or a radio network controller (Radio Network Controller, RNC for short hereinafter), which is not limited in this embodiment. Persons skilled in the art may understand that the technical solutions according to the embodiments of the present invention are applicable to a device which needs to check whether running data is tampered.

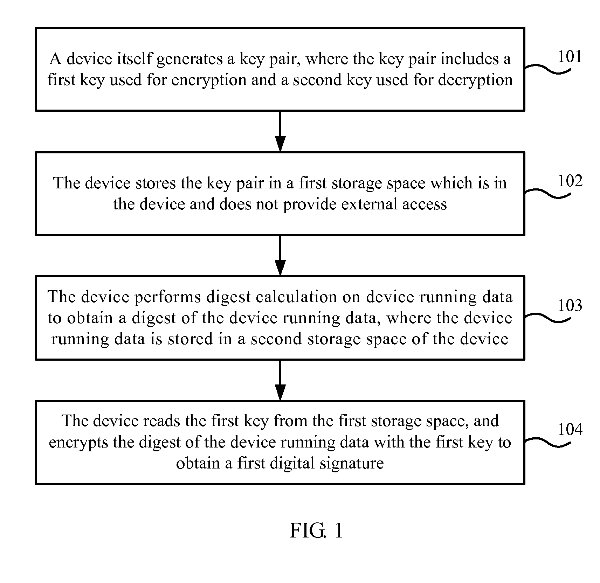

FIG. 1 is a flowchart of Embodiment 1 of an encryption processing method according to the present invention. As shown in FIG. 1, the method of this embodiment describes a process in which a device performs encryption processing for device running data at a manufacture stage, and the method may include the following steps.

Step 101: The device itself generates a key pair, where the key pair includes a first key used for encryption and a second key used for decryption.

Step 102: The device stores the key pair in a first storage space which is in the device and does not provide external access.

Step 103: The device performs digest calculation on device running data to obtain a digest of the device running data, where the device running data is stored in a second storage space of the device.

Step 104: The device reads the first key from the first storage space, and encrypts the digest of the device running data with the first key to obtain a first digital signature.

In this embodiment, the first key and the second key are not provided by a device vendor, but are generated by the device itself.

The first key used for encryption and the second key used for decryption may be symmetric keys, that is, the first key and the second key are identical keys. The first key and the second key may also be asymmetric keys, that is, the first key and the second key are different; for example, a private key may be used as the first key and a public key may be used as the second key, or, a public key may be used as the first key and a private key may be used as the second key.

When the device itself generates the key pair, the device can generate the key pair according to information corresponding to the device, so that keys generated by different devices are different as far as possible. For example, the device can generate the key pair automatically according to at least one of key seeds, where the key seed may include an electronic serial number (Electronic Serial Number, ESN for short hereinafter), a random number generated by the device itself, and current system time.

For example, the device may generate the key pair with an algorithm that splices the foregoing two or three of key seeds, or may obtain the key pair with one of the key seeds as an input parameter of a key generating algorithm function.

In a specific implementation, the device itself may generate the key pair with various possible key generating algorithms. This embodiment does not limit a specific key generating algorithm, as long as the foregoing information having unique correspondence with the device is considered in the key generation process, that is, it can be ensured as far as possible that different devices generate different key pairs. In addition, a key pair generation process performed by a device itself may or may not be triggered by the outside. Information for generating the key pair does not need to be provided by the outside; instead, information owned by the device (for example, information stored in the device) is used.

The device in this embodiment may include two storage spaces, where a first storage space is used to store a key pair, and a second storage space is used to store device running data which may include a software package and/or a configuration file.

To ensure security of keys, in this embodiment, the first storage space is a storage space that does not provide external access, that is, the first key and the second key can be used only inside the device and cannot be acquired by the outside.

In this embodiment, the first storage space may use at least one of the following three types:

A first-type storage space. The first-type storage space may be a storage space that is hidden to a device other than the device, that is, the first-type storage space is invisible to a device other than the device. The first-type storage space may be a part of space which is allocated in the storage space of the device, for example, a flash, and an attribute of this part of space is set to a hidden type. Alternatively, for certain devices, they have some storage spaces that are externally invisible.

A second-type storage space. The second-type storage space may be an internal storage space of a secure chip. That is, a secure chip may be disposed in a device, and the device may use a storage space of the secure chip as the second-type storage space. The secure chip is a trusted platform module (Trusted Platform Module, TPM for short hereinafter), which can automatically encrypt data stored in the chip, and decrypt, after it is verified that an identity of an access device is valid, data to be read. Therefore, the secure chip can encrypt and store a key pair generated by the device; when the device needs to read the key pair from the secure chip, the secure chip can decrypt the key pair after determining that an identity of the device is valid.

A third-type storage space. The third-type storage space may be a storage space of a write-once dedicated component that disallows modification of data after the data is written. That is, the write-once dedicated component allows only one write operation and disallows subsequent write operations such as modification and replacement. The storage space of the write-once dedicated component may be a newly added component in the device.

The second storage space may be a common storage space in the device, such as a flash memory (flash) or an electrically erasable programmable read-only memory (Electrically Erasable Programmable Read-Only Memory, EEPROM for short hereinafter).

After the device completes generation of the key pair by itself and stores the generated key pair in the first storage space, the device can implement integrity protection for device running data before the device is sold.

Specifically, the device can perform digest calculation on the device running data to obtain a digest of the device running data. For example, the device may perform digest calculation with a hash (HASH for short hereinafter) algorithm on the device running data to obtain the digest of the device running data.

Next, the device may read the first key from the first storage space, and encrypt the digest of the device running data with the first key to obtain a first digital signature.

Optionally, the device may also store the first digital signature in the second storage space.

Up to now, the device obtains original device running data, a first digital signature corresponding to the original device running data, and the first key and the second key that are generated by the device itself. The integrity protection at the manufacture stage of the device is completed in the foregoing process.

After the device completes the integrity protection at the manufacture stage, a usage stage of the device can start. For example, after the device is sold to a device user such as an operator, the device is powered on, and the usage stage of the device starts. When the device is in use, the device can check, at any time as required, whether the stored device running data is tampered, for example, when the device is started for the first time, when the device is powered off and powered on again, when the device is running, or when the device receives a check instruction from a control center.

The following describes, by using an example, a process in which the device checks, at initial starting of the device, whether the stored device running data is tampered.

After the device is powered on and started for the first time, the device may read the device running data and the first digital signature from the second storage space; perform digest calculation on the read device running data to obtain a digest of the read device running data, where a used digest algorithm is the same as a digest algorithm used at the manufacture stage; and read the second key used for decryption from the first storage space, and decrypt the first digital signature with the second key to obtain a decrypted digest. Up to now, the device completes the decryption process. Further, the device may determine whether the digest of the read device running data is consistent with the decrypted digest. If consistent, the device may determine that the device running data is not tampered, and further, run a related function with the device running data for the first time; and if inconsistent, the device determines that the device running data is tampered, and further, performs an operation, for example, sends an alarm signal or discards the device running data.

Understandably, if whether the stored device running data is tampered is checked at another time, for example, whether the device running data is tampered is checked in the running process of the device, the device can continue running without interruption after determining that the device running data is not tampered; or the device can stop running, and send an alarm signal, or the like after determining that the device running data is tampered.

In this embodiment, a first key and a second key are a key pair generated by a device itself. At a manufacture stage, the device can implement, with the first key, integrity protection for device running data; and at a usage stage, the device can check, with the second key, whether the device running data is tampered, where the first key is used for encryption and the second key is used for decryption. Because both the first key and the second key are generated by the device itself, and the key pair is stored in a first storage space which is in the device and does not provide external access, the key pair is not transmitted outside the device, which can effectively reduce a possibility of key disclosure. In addition, the key pair is not provided by a device vendor, which can improve credibility of the device.

Further, the key pair can be stored only in the first storage space and used only for encryption and/or decryption inside the device, thereby enhancing security. For example, when the device itself generates the key pair, a unit used in the device to generate the key pair may also be prohibited from offering or storing the generated key pair in a unit other than the first storage space, that is, the key pair is stored only in the first storage space and cannot be acquired by or stored in a unit other than the first storage space. For another example, in the encryption process, a unit used in the device to read the first key may also be prohibited from offering the read first key to another unit, that is, the read first key is restricted to be used only in the internal encryption process of the unit. For another example, in the decryption process, a unit used in the device to read the second key may also be prohibited from offering the read second key to another unit, that is, the read second key is restricted to be used only in the internal decryption process of the unit.

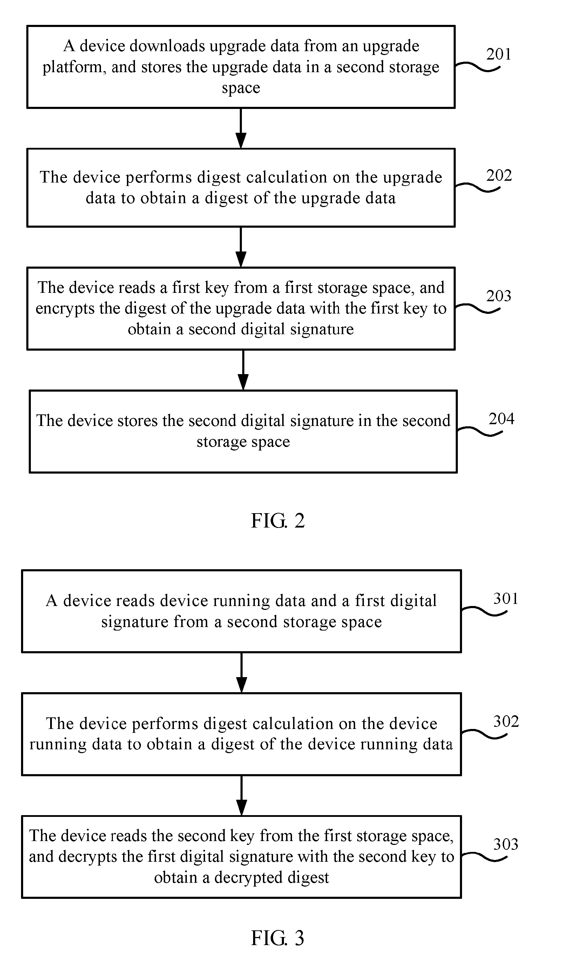

FIG. 2 is a flowchart of Embodiment 2 of an encryption processing method according to the present invention. As shown in FIG. 2, this embodiment describes an encryption processing process performed when a device needs to be upgraded at a usage stage, and the method may include the following steps.

Step 201: A device downloads upgrade data from an upgrade platform, and stores the upgrade data in a second storage space.

Step 202: The device performs digest calculation on the upgrade data to obtain a digest of the upgrade data.

Step 203: The device reads a first key from a first storage space, and encrypts the digest of the upgrade data with the first key to obtain a second digital signature.

Step 204: The device stores the second digital signature in the second storage space.

Specifically, when the device needs to be upgraded, the device may download upgrade data from the upgrade platform. In addition, the upgrade can be stored in the second storage space like the device running data in the foregoing Embodiment 1. When or after storing the upgrade data, the device can implement integrity protection for the upgrade data. The process is as follows: The device performs digest calculation on the upgrade data to obtain the digest of the upgrade data, for example, to perform the digest calculation with a HASH algorithm; next, the device can read the first key used for encryption from the first storage space, and encrypt the digest of the upgrade data with the first key to obtain the second digital signature; and then, the device can store the second digital signature in the second storage space.

Up to now, the device can obtain the upgrade data and the second digital signature corresponding to the upgrade data. The integrity protection for the upgrade data when the device needs to be upgraded at the usage stage is completed in the foregoing process.

When the device needs to be upgraded, the device first needs to check whether the upgrade data stored in the second storage space is tampered locally in the device, that is, the device needs to check whether the upgrade data stored in the second storage space is consistent with the original upgrade data downloaded by the device from the upgrade platform.

Specifically, the device can read the upgrade data and the second digital signature from the second storage space, and perform digest calculation on the upgrade data to obtain the digest of the read upgrade data, where a used digest algorithm is the same as a digest algorithm used for integrity protection of the upgrade data; then, the device can read the second key used for decryption from the first storage space, and decrypt the second digital signature with the second key to obtain the decrypted digest. Up to now, the device can complete the decryption process. Further, the device may determine whether the digest of the read upgrade data is consistent with the decrypted digest. If consistent, the device can determine that the upgrade data is not tampered, and optionally, the device may further use the upgrade data for upgrade, or continue to store the upgrade data until upgrade time is reached; and if inconsistent, the device determines that the upgrade data is tampered, and further performs an operation, for example, sends an alarm signal, or discards the upgrade data, or re-downloads upgrade data from the upgrade platform. Understandably, for an upgrade process, the device can check whether the software data is tampered at any time during a period after upgrade data is downloaded to the device and before the device performs upgrade, which is not limited by this embodiment.

The upgrade data in this embodiment may include an upgrade software package, or a configuration file, or an upgrade software package and a configuration file.

It should be noted that in this embodiment, when the device has both the device running data obtained at the manufacture stage and the upgrade data downloaded in the upgrade process, the two types of data can be differentiated by internal data identifiers included in the data. For example, a data identifier included in the device running data is an original version identifier, and a data identifier included in the upgrade data is a new version identifier. Details are not repeated again in other embodiments.

In this embodiment, a device can implement integrity protection for upgrade data with a first key which is generated by the device itself and used for encryption; and before upgrade, the device can check, with a second key which is generated by the device itself and used for decryption, whether the upgrade data is tampered. Because both the first key and the second key are generated by the device itself, and the key pair is stored in a first storage space which is in the device and does not provide external access, the key pair is not transmitted outside the device, which can effectively reduce a possibility of key disclosure. In addition, the key pair is not provided by a device vendor, which can improve credibility of the device.

FIG. 3 is a flowchart of Embodiment 1 of a decryption processing method according to the present invention. As shown in FIG. 3, the method of this embodiment describes a process in which decryption processing is performed for device running data when a device is started for the first time at a usage stage.

The device may include a first storage space and a second storage space, where the first storage space is a space that does not provide external access; the first storage space is used to store a key pair, where the key pair is generated by the device itself, and the key pair includes a first key used for encryption and a second key used for decryption; and the second storage space is used to store data and a digital signature, where the data includes device running data, and the digital signature includes a first digital signature which is obtained by the device by encrypting a digest of the device running data with the first key. The method may include the following steps.

Step 301: The device reads the device running data and the first digital signature from the second storage space.

Step 302: The device performs digest calculation on the device running data to obtain a digest of the device running data.

Step 303: The device reads the second key from the first storage space, and decrypts the first digital signature with the second key to obtain a decrypted digest.

Specifically, in this embodiment, the first key and the second key are not provided by a device vendor, but are generated by the device itself. The first key used for encryption and the second key used for decryption may be symmetric keys, that is, the first key and the second key are identical keys. The first key and the second key may also be asymmetric keys, that is, the first key and the second key are different; for example, a private key may be used as the first key and a public key may be used as the second key, or, a public key may be used as the first key and a private key may be used as the second key.

When the device itself generates the key pair, the device can generate the key pair according to information corresponding to the device, so that keys generated by different devices are different as far as possible. For example, the device itself can generate the key pair according to at least one of key seeds, where the key seed may include an ESN, a random number generated by the device itself, and current system time.

For example, the device may use an algorithm that splices the foregoing two or three of key seeds to generate the key pair, or may use one of the key seeds as an input parameter of a key generating algorithm function to obtain the key pair.

In a specific implementation, the device itself may use various possible key generating algorithms to generate the key pair. This embodiment does not limit a specific key generating algorithm, as long as the foregoing information having unique correspondence with the device is considered in a key generation process, that is, it can be ensured as far as possible that different devices generate different key pairs.

The device in this embodiment may include two storage spaces, where a first storage space is used to store a key pair, and a second storage space is used to store device running data which may include a software package and/or a configuration file.

To ensure security of keys, in this embodiment, the first storage space is a storage space that does not provide external access, that is, the first key and the second key can be used only inside the device and cannot be acquired by the outside.

In this embodiment, at least three types of storage spaces may be used as the first storage space. The specific types have been described above, and details are not repeated any further.

The second storage space may be a common storage space on the device, such as a flash or an EEPROM.

After the device completes generation of the key pair by itself and stores the generated key pair in the first storage space, the device can implement integrity protection for device running data before the device is sold.

Specifically, the device can perform digest calculation on the device running data to obtain a digest of the device running data. For example, the device may perform digest calculation with a HASH algorithm on the device running data to obtain the digest of the device running data.

Next, the device may read the first key from the first storage space, and encrypt the digest of the device running data with the first key to obtain a first digital signature. Optionally, the device may also store the first digital signature in the second storage space.

In the foregoing process, integrity protection at the manufacture stage is completed. After the device completes the integrity protection at the manufacture stage, the device can be sold to a device user such as an operator, and the usage stage starts.

When the device is in use, the device can check, at any time as required, whether the stored device running data is tampered, for example, when the device is started for the first time, when the device is powered off and powered on again, when the device is running, or when the device receives a check instruction from a control center.

The following describes a process of decryption and checking whether the stored device running data is tampered when the device is started initially.

After the device is powered on and started for the first time, the device may read the device running data and the first digital signature from the second storage space; perform digest calculation on the read device running data to obtain a digest of the read device running data, where a used digest algorithm is the same as a digest algorithm used at the manufacture stage; and read the second key used for decryption from the first storage space, and decrypt the first digital signature with the second key to obtain a decrypted digest. Up to now, the device completes the decryption process. Further, the device may determine whether the digest of the read device running data is consistent with the decrypted digest. If consistent, the device can determine that the device running data is not tampered, and further, run a related function with the device running data for the first time; and if inconsistent, the device determines that the device running data is tampered, and further, performs an operation, for example, sends an alarm signal or discards the device running data.

Understandably, if whether the stored device running data is tampered is checked at another time, for example, whether the stored device running data is tampered is checked in the running process of the device, the device can continue running without interruption after determining that the device running data is not tampered; or the device can stop running, and send an alarm signal, or the like after determining that the device running data is tampered.

In this embodiment, a first key and a second key are a key pair generated by a device itself. At a manufacture stage, the device can implement, with the first key, integrity protection for device running data; and at a usage stage, the device can check, with the second key, whether the device running data is tampered, where the first key is used for encryption and the second key is used for decryption. Because both the first key and the second key are generated by the device itself, and the key pair is stored in a first storage space which is in the device and does not provide external access, the key pair is not transmitted outside the device, which can effectively reduce a possibility of key disclosure. In addition, the key pair is not provided by a device vendor, which can improve credibility of the device.

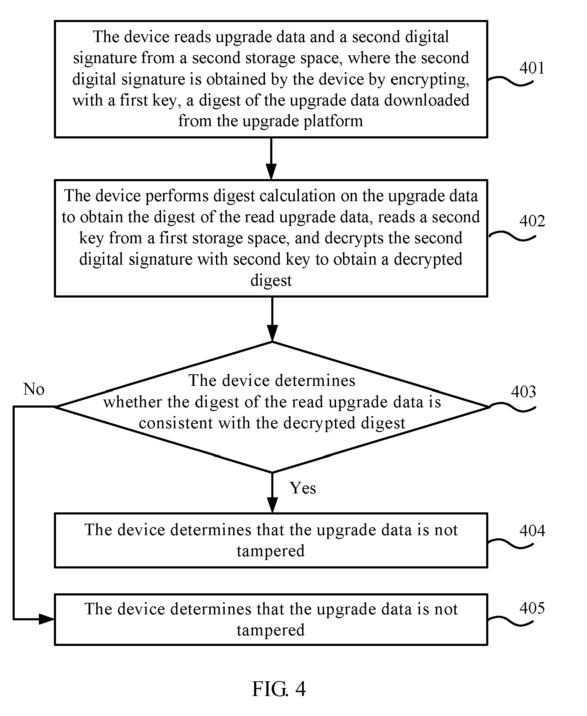

FIG. 4 is a flowchart of Embodiment 2 of a decryption processing method according to the present invention. As shown in FIG. 4, the method of this embodiment describes a decryption processing process performed when a device needs to be upgraded at a usage stage, where data stored in a second storage space may further include upgrade data downloaded from an upgrade platform, and a digital signature stored in a first storage space may further include a second digital signature.

The method of this embodiment may include the following steps.

Step 401: The device reads the upgrade data and the second digital signature from the second storage space, where the second digital signature is obtained by the device by encrypting, with a first key, a digest of the upgrade data downloaded from the upgrade platform.

Step 402: The device performs digest calculation on the upgrade data to obtain the digest of the read upgrade data, reads a second key from the first storage space, and decrypts the second digital signature with second key to obtain a decrypted digest.

Step 403: The device determines whether the digest of the read upgrade data is consistent with the decrypted digest, and if yes, performs step 404; otherwise, performs step 405.

Step 404: The device determines that the upgrade data is not tampered.

Step 405: The device determines that the upgrade data is tampered.

In this embodiment, a first key and a second key are a key pair generated by a device itself. The device can implement, with the first key, integrity protection for upgrade data, where the first key is used for encryption. Before upgrade, the device can check, with the second key, whether the upgrade data is tampered, where the second key is used for decryption. Because both the first key and the second key are generated by the device itself, and the key pair is stored in a first storage space which is in the device and does not provide external access, the key pair is not transmitted outside the device, which can effectively reduce a possibility of key disclosure. In addition, the key pair is not provided by a device vendor, which can improve credibility of the device.

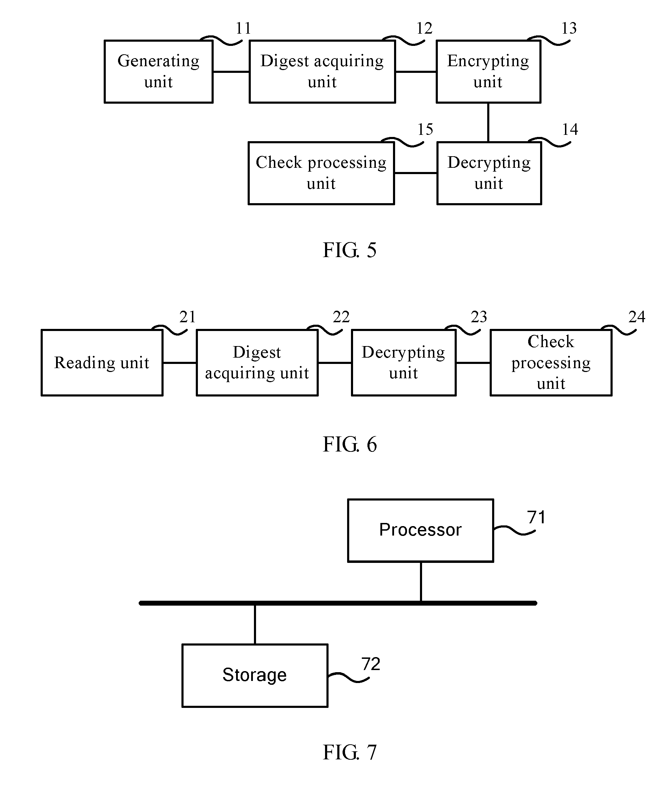

FIG. 5 is a schematic structural diagram of an embodiment of an encryption processing apparatus according to the present invention. As shown in FIG. 5, the apparatus of this embodiment is disposed in a device and may include: a generating unit 11, a digest acquiring unit 12, and an encrypting unit 13.

The generating unit 11 is configured to generate a key pair by itself, where the key pair includes a first key used for encryption and a second key used for decryption; and store the key pair in a first storage space which is in the device and does not provide external access. The digest acquiring unit 12 is configured to perform digest calculation on device running data to obtain a digest of the device running data, where the device running data is stored in a second storage space of the device. The encrypting unit 13 is configured to read the first key from the first storage space, and encrypt the digest of the device running data with the first key to obtain a first digital signature.

Optionally, after being triggered by the outside (for example, another device, or another unit inside the device shown in FIG. 5), the generating unit 11 automatically generates a key pair. That is, in this generation process, the key pair is generated with information owned by the device shown in FIG. 5 (for example, information stored in the device).

Optionally, in order to enhance security, the generating unit 11 may be prohibited from offering or storing the key pair generated by the generating unit in a unit other than the first storage space, and the encrypting unit 13 may be prohibited from offering the read first key to another unit, and restrict the read first key to be used in the encryption process inside the unit.

Optionally, the encrypting unit 13 may be further configured to store the first digital signature in the second storage space.

Further, the generating unit 11 may be specifically configured to generate a key pair according to an electronic serial number ESN of the device, a random number generated by the device itself, and current system time.

The first storage space may include any one of the following items: a first-type storage space, a second-type storage space, and a third-type storage space, where the first-type storage space is a storage space that is hidden to a device other than the device; the second-type storage space is an internal storage space of a secure chip; and the third-type storage space is a storage space of a write-once dedicated component that disallows modification of data after the data is written.

Further, the apparatus may further include: a decrypting unit 14, configured to read the device running data and the first digital signature from the second storage space, perform digest calculation on the device running data to obtain a digest of the read device running data, read the second key from the first storage space, and decrypt the first digital signature with the second key to obtain a decrypted digest; and a check processing unit 15, configured to determine whether the digest of the read device running data is consistent with the decrypted digest, where if the digest of the read device running data is consistent with the decrypted digest, the device uses the device running data for initialization configuration; and if the digest of the read device running data is inconsistent with the decrypted digest, the device determines that the device running data is tampered. If the digest of the read device running data is consistent with the decrypted digest, it indicates that the device running data is not tampered.

Optionally, to enhance security, the encrypting unit 14 may be prohibited from offering the read second key to another unit, and restrict the read second key to be used in the decryption process inside the unit.

The apparatus in this embodiment may be configured to execute the technical solution of the method embodiment shown in FIG. 1. The implementation principles and technical effects are similar, and are not further described herein.

In another optional embodiment, the generating unit 11 is further configured to download upgrade data from an upgrade platform, and store the upgrade data in the second storage space; the digest acquiring unit 12 is further configured to perform digest calculation on the upgrade data to obtain a digest of the upgrade data; and an encrypting unit 13 is further configured to read the first key from the first storage space, and encrypt the digest of the upgrade with the first key to obtain a second digital signature. Optionally, the encrypting unit 13 may be further configured to store the second digital signature in the second storage space.

Further, the decrypting unit 14 may be further configured to read the upgrade data and the second digital signature from the second storage space, perform digest calculation on the upgrade data to obtain the digest of the read upgrade data, read the second key from the first storage space, and decrypt the second digital signature with the second key to obtain a decrypted digest.

Further, the check processing unit 15 may be further configured to determine whether the digest of the read upgrade data is consistent with the decrypted digest, where if the digest of the read upgrade data is consistent with the decrypted digest, the device uses the upgrade data for upgrade; and if the digest of the read upgrade data is inconsistent with the decrypted digest, the device determines that the upgrade data is tampered. If the digest of the read upgrade data is consistent with the decrypted digest, it indicates that the upgrade data is not tampered.

This optional embodiment may be used to execute the technical solution of the method embodiment shown in FIG. 2. The implementation principles and technical effects are similar, and are not further described herein.

In the foregoing apparatus embodiment, the first key and the second key may be a symmetric key pair, or may also be an asymmetric key pair.

The device running data may include a software package and/or a configuration file. The upgrade data may include an upgrade software package and/or a configuration file.

FIG. 6 is a schematic structural diagram of an embodiment of a decryption processing apparatus according to the present invention. As shown in FIG. 6, the apparatus of this embodiment is disposed in a device, where the device includes a first storage space and a second storage space; the first storage space is a space that does not provide external access;
the first storage space is used to store a key pair, where the key pair is generated by the device itself, and the key pair includes a first key used for encryption and a second key used for decryption; and
the second storage space is used to store data and a digital signature, where the data includes device running data, and the digital signature includes a first digital signature which is obtained by the device by encrypting a digest of the device running data with the first key.

The apparatus of this embodiment may include: a reading unit 21, a digest acquiring unit 22, and a decrypting unit 23. The reading unit 21 is configured to read the device running data and the first digital signature from the second storage space. The digest acquiring unit 22 is configured to perform digest calculation on the device running data to obtain a digest of the device running data. The decrypting unit 23 is configured to read the second key from the first storage space, and decrypt the first digital signature with the second key to obtain a decrypted digest.

Optionally, to enhance security, the encrypting unit 23 may be prohibited from offering the read second key to another unit, and restrict the read second key to be used in the decryption process inside the unit.

Further, the apparatus may further include: a check processing unit 24, configured to determine whether the digest of the device running data is consistent with the decrypted digest, where if the digest of the device running data is consistent with the decrypted digest, the device uses the device running data for initialization configuration; and if the digest of the device running data is inconsistent with the decrypted digest, the device determines that the device running data is tampered. If the digest of the read device running data is consistent with the decrypted digest, it indicates that the device running data is not tampered.

This embodiment may be used to execute the technical solution of the method embodiment shown in FIG. 3. The implementation principles and technical effects are similar, and are not further described herein.

In another optional embodiment, the data further includes upgrade data downloaded from an upgrade platform, and the digital signature further includes a second digital signature; the reading unit 21 may be further configured to read the upgrade data and the second digital signature from the second storage space, where the second digital signature is obtained by the device by encrypting a digest of the upgrade data with the first key; the digest acquiring unit 22 may be further configured to perform digest calculation on the upgrade data to obtain the digest of the read upgrade data; and the decrypting unit 23 may be further configured to read the second key from the first storage space, and decrypt the second digital signature with the second key to obtain a decrypted digest.

Further, the check processing unit 24 may be further configured to determine whether the digest of the read upgrade data is consistent with the decrypted digest; if the digest of the read upgrade data is consistent with the decrypted digest, use the upgrade data for upgrade; and if the digest of the read upgrade data is inconsistent with the decrypted digest, determine that the upgrade data is tampered. If the digest of the read upgrade data is consistent with the decrypted digest, it indicates that the upgrade data is not tampered.

The first storage space includes any one of the following items: a first-type storage space, a second-type storage space, and a third-type storage space, where the first-type storage space is a storage space that is hidden to a device other than the device; the second-type storage space is an internal storage space of a secure chip; and the third-type storage space is a storage space of a write-once dedicated component that disallows modification of data after the data is written.

This optional embodiment may be used to execute the technical solution of the method embodiment shown in FIG. 4. The implementation principles and technical effects are similar, and are not further described herein.

FIG. 7 is a schematic structural diagram of an embodiment of a device according to the present invention. As shown in FIG. 7, the device of this embodiment may include a processor 71 and a storage 72. The storage 72 is connected to the processor 71 by using a bus, where the bus may be one or multiple physical lines; and in a case where the bus includes multiple physical lines, the bus may be classified into an address bus, a data bus, a control bus, and the like. The storage 72 includes a first storage space and a second storage space, where the first storage space is a storage space that does not provide external access. In addition, the storage 72 may also store an execution instruction, for example, the execution instruction may be stored in the second storage space. When the device runs, the processor 71 and the storage 72 communicate with each other. The processor 71 may invoke the execution instruction in the storage 72, as well as a key pair stored in a first storage space and device running data stored in a second storage space in the storage 72, to perform a corresponding operation.

Specifically, the processor 71 is configured to: generate a key pair by itself, where the key pair includes a first key used for encryption and a second key used for decryption; store the key pair in the first storage space; perform digest calculation on device running data to obtain a digest of the device running data, where the device running data is stored in the second storage space; read the first key from the first storage space; and encrypt the digest of the device running data with the first key to obtain a first digital signature.

For example, after being triggered by the outside (for example, another device, or another component inside the device shown in FIG. 7), the processor 71 automatically generates a key pair. That is, in this generation process, the key pair is generated with information owned by the device shown in FIG. 5 (for example, information stored in the device).

Optionally, in order to enhance security, the processor 71 may be prohibited from offering or storing the key pair generated by the processor in a unit other than the first storage space, and may further be prohibited from offering the read first key to another component, and restrict the read first key to be used in the encryption process inside the processor 71.

Further, the processor 71 is further configured to store the first digital signature in the second storage space.

Further, the processor 71 is specifically configured to generate a key pair by itself according to at least one of key seeds, where the key seed includes an electronic serial number ESN, a random number generated by the device itself, and current system time.

The first storage space includes any one of the following items: a first-type storage space, a second-type storage space, and a third-type storage space, where the first-type storage space is a storage space that is hidden to a device other than the device; the second-type storage space is an internal storage space of a secure chip; and the third-type storage space is a storage space of a write-once dedicated component that disallows modification of data after the data is written.

Further, the processor 71 is further configured to read the device running data and the first digital signature from the second storage space, perform digest calculation on the device running data to obtain a digest of the read device running data, read the second key from the first storage space, and decrypt the first digital signature with the second key to obtain a decrypted digest.

Optionally, to enhance security, the processor 71 may further be prohibited from offering the read second key to another component, and restrict the read second key to be used in the decryption process inside the processor 71.

Further, the processor 71 is further configured to determine whether the digest of the read device running data is consistent with the decrypted digest; and if the digest of the read device running data is consistent with the decrypted digest, determine that the device running data is not tampered.

Alternatively, further, the processor 71 is further configured to determine whether the digest of the read device running data is consistent with the decrypted digest; and if the digest of the read device running data is inconsistent with the decrypted digest, determine that the device running data is tampered.

For an upgrade process, further, the processor 71 is further configured to download upgrade data from an upgrade platform and store the upgrade data in the second storage space; perform digest calculation on the upgrade data to obtain a digest of the upgrade data; read the first key from the first storage space; and encrypt the digest of the upgrade data with the first key to obtain a second digital signature.

Further, the processor 71 is further configured to store the second digital signature in the second storage space.

Further, the processor 71 is further configured to read the upgrade data and the second digital signature from the second storage space, perform digest calculation on the upgrade data to obtain the digest of the read upgrade data, read the second key from the first storage space, and decrypt the second digital signature with the second key to obtain a decrypted digest.

Further, the processor 71 is further configured to determine whether the digest of the read upgrade data is consistent with the decrypted digest; and if the digest of the read upgrade data is consistent with the decrypted digest, determine that the upgrade data is not tampered. Alternatively, further, the processor 71 is further configured to determine whether the digest of the read upgrade data is consistent with the decrypted digest; and if the digest of the read upgrade data is inconsistent with the decrypted digest, determine that the upgrade data is tampered.

The first key and the second key are a symmetric key pair or an asymmetric key pair.

Optionally, the device running data includes a software package and/or a configuration file, and the upgrade data includes an upgrade software package and/or a configuration file.

In another embodiment of the device of the present invention, the device structure shown in FIG. 7 may still be used. In this embodiment, the device may be used to execute the decryption process. Descriptions are given below by using an example. Understandably, the implementation principles and technical effects are similar, and are not further described herein.

The first storage space of the storage 72 is used to store a key pair, where the key pair is generated by the device itself, and the key pair includes a first key used for encryption and a second key used for decryption. The second storage space of the storage 72 is used to store data and a digital signature, where the data includes device running data, and the digital signature includes a first digital signature which is obtained by the device by encrypting a digest of the device running data with the first key.

Specifically, the processor 71 is configured to read the device running data and the first digital signature from the second storage space, perform digest calculation on the device running data to obtain a digest of the device running data, read the second key from the first storage space, and decrypt the first digital signature with the second key to obtain a decrypted digest.

Further, the processor 71 is further configured to determine whether the digest of the device running data is consistent with the decrypted digest; and if the digest of the device running data is consistent with the decrypted digest, determine that the device running data is not tampered. Alternatively, further, the processor 71 is further configured to determine whether the digest of the device running data is consistent with the decrypted digest; and if the digest of the device running data is inconsistent with the decrypted digest, determine that the device running data is tampered.

For an upgrade process, the data stored in the second storage space may further includes upgrade data downloaded from an upgrade platform; the digital signature stored in the first storage space may further include a second digital signature; and, the processor 71 is further configured to read the upgrade data and the second digital signature from the second storage space, where the second digital signature is obtained by the device by encrypting a digest of the upgrade data with the first key,
perform digest calculation on the upgrade data to obtain the digest of the read upgrade data, read the second key from the first storage space, and decrypt the second digital signature with the second key to obtain a decrypted digest.

Further, the processor 71 is further configured to determine whether the digest of the read upgrade data is consistent with the decrypted digest; and if the digest of the read upgrade data is consistent with the decrypted digest, determine that the upgrade data is not tampered. Alternatively, further, the processor 71 is further configured to determine whether the digest of the read upgrade data is consistent with the decrypted digest; and if the digest of the read upgrade data is inconsistent with the decrypted digest, determine that the upgrade data is tampered.

The first storage space includes any one of the following items: a first-type storage space, a second-type storage space, and a third-type storage space, where the first-type storage space is a storage space that is hidden to a device other than the device; the second-type storage space is an internal storage space of a secure chip; and the third-type storage space is a storage space of a write-once dedicated component that disallows modification of data after the data is written.

Optionally, the device running data includes a software package and/or a configuration file, and the upgrade data includes an upgrade software package and/or a configuration file.

The device described in the embodiments of the present invention may be, for example, a UE, a base station, or an RNC, which is not limited in this embodiment. Persons skilled in the art may understand that the technical solutions according to the embodiments of the present invention are applicable to a device which needs to check whether running data is tampered.

It should be noted that unless otherwise specified, an action or a unit described as "further" in the foregoing embodiments may be understood as an optional item of the embodiment.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. An encryption processing method, comprising:
generating, by a device itself, a key pair, wherein the key pair comprises a first key used for encryption and a second key used for decryption;
storing, by the device, the key pair in a first storage space which is in the device and does not provide external access;
performing, by the device, digest calculation on device running data to obtain a digest of the device running data, wherein the device running data is stored in a second storage space of the device; and
reading, by the device, the first key from the first storage space, and encrypting the digest of the device running data with the first key to obtain a first digital signature.

2. The method according to claim 1, further comprising:
storing, by the device, the first digital signature in the second storage space.

3. The method according to claim 1 or 2, wherein the generating, by a device itself, a key pair comprises:
generating, by the device, the key pair automatically according to at least one of key seeds, wherein
the key seed comprises:
an electronic serial number ESN, a random number generated by the device itself, and current system time.

4. The method according to any one of claims 1 to 3, wherein the first storage space comprises any one of the following items:
a first-type storage space, a second-type storage space, and a third-type storage space,
wherein the first-type storage space is a storage space that is hidden to a device other than the device;
the second-type storage space is an internal storage space of a secure chip; and
the third-type storage space is a storage space of a write-once dedicated component that disallows modification of data after the data is written.

5. The method according to any one of claims 1 to 4, wherein after the encrypting the digest of the device running data with the first key to obtain a first digital signature, the method further comprises:
reading, by the device, the device running data and the first digital signature from the second storage space; and
performing, by the device, digest calculation on the device running data to obtain the digest of the read device running data, reading the second key from the first storage space, and decrypting the first digital signature with the second key to obtain a decrypted digest.

6. The method according to claim 5, wherein after the decrypting the first digital signature with the second key to obtain a decrypted digest, the method further comprises:
determining, by the device, whether the digest of the read device running data is consistent with the decrypted digest; and
if the digest of the read device running data is consistent with the decrypted digest, determining, by the device, that the device running data is not tampered.

7. The method according to claim 5, wherein after the decrypting the first digital signature with the second key to obtain a decrypted digest, the method further comprises:
determining, by the device, whether the digest of the read device running data is consistent with the decrypted digest; and
if the digest of the read device running data is inconsistent with the decrypted digest, determining, by the device, that the device running data is tampered.

8. The method according to any one of claims 1 to 7, wherein after the storing the key pair in a first storage space which is in the device and does not provide external access, the method further comprises:
downloading, by the device, upgrade data from an upgrade platform, and storing the upgrade data in the second storage space;
performing, by the device, digest calculation on the upgrade data to obtain a digest of the upgrade data; and
reading, by the device, the first key from the first storage space, and encrypting the digest of the upgrade data with first key to obtain a second digital signature.

9. The method according to claim 8, wherein after the encrypting the digest of the upgrade data with first key to obtain a second digital signature, the method further comprises:
storing, by the device, the second digital signature in the second storage space.

10. The method according to claim 8 or 9, wherein after the encrypting the digest of the upgrade data with first key to obtain a second digital signature, the method further comprises:
reading, by the device, the upgrade data and the second digital signature from the second storage space; and
performing, by the device, digest calculation on the upgrade data to obtain the digest of the read upgrade data, reading the second key from the first storage space, and decrypting the second digital signature with the second key to obtain a decrypted digest.

11. The method according to claim 10, wherein after the decrypting the second digital signature with the second key to obtain a decrypted digest, the method further comprises:
determining, by the device, whether the digest of the read upgrade data is consistent with the decrypted digest; and
if the digest of the read upgrade data is consistent with the decrypted digest, determining, by the device, that the upgrade data is not tampered.

12. The method according to claim 10, wherein after the decrypting the second digital signature with the second key to obtain a decrypted digest, the method further comprises:
determining, by the device, whether the digest of the read upgrade data is consistent with the decrypted digest; and
if the digest of the read upgrade data is inconsistent with the decrypted digest, determining, by the device, that the upgrade data is tampered.

13. The method according to any one of claims 1 to 12, wherein the first key and the second key are a symmetric key pair or an asymmetric key pair.

14. The method according to any one of claims 1 to 13, wherein the device running data comprises a software package and/or a configuration file.

15. The method according to any one of claims 8 to 13, wherein the upgrade data comprises an upgrade software package and/or a configuration file.

16. A decryption processing method, wherein: a device comprises a first storage space and a second storage space; the first storage space is a space that does not provide external access;
the first storage space is used to store a key pair, wherein the key pair is generated by the device itself, and the key pair comprises a first key used for encryption and a second key used for decryption;
the second storage space is used to store data and a digital signature, wherein the data comprises device running data, and the digital signature comprises a first digital signature which is obtained by the device by encrypting a digest of the device running data with the first key; and
the method comprises:
reading, by the device, the device running data and the first digital signature from the second storage space;
performing, by the device, digest calculation on the device running data to obtain a digest of the device running data; and
reading, by the device, the second key from the first storage space, and decrypting the first digital signature with the second key to obtain a decrypted digest.

17. The method according to claim 16, wherein after the decrypting the first digital signature with the second key to obtain a decrypted digest, the method further comprises:
determining, by the device, whether the digest of the device running data is consistent with the decrypted digest; and
if the digest of the device running data is consistent with the decrypted digest, determining, by the device, that the device running data is not tampered.

18. The method according to claim 16, wherein after the decrypting the first digital signature with the second key to obtain a decrypted digest, the method further comprises:
determining, by the device, whether the digest of the device running data is consistent with the decrypted digest; and
if the digest of the device running data is inconsistent with the decrypted digest, determining, by the device, that the device running data is tampered.

19. The method according to any one of claims 16 to 18, wherein: the data further comprises upgrade data downloaded from an upgrade platform; the digital signature further comprises a second digital signature; and the method further comprises:
reading, by the device, the upgrade data and the second digital signature from the second storage space, wherein the second digital signature is obtained by the device by encrypting a digest of the upgrade data with the first key; and
performing, by the device, digest calculation on the upgrade data to obtain the digest of the read upgrade data, reading the second key from the first storage space, and decrypting the second digital signature with the second key to obtain a decrypted digest.

20. The method according to claim 19, wherein after the decrypting the second digital signature with the second key to obtain a decrypted digest, the method further comprises:
determining, by the device, whether the digest of the read upgrade data is consistent with the decrypted digest; and
if the digest of the read upgrade data is consistent with the decrypted digest, determining, by the device, that the upgrade data is not tampered.

21. The method according to claim 19, wherein after the decrypting the second digital signature with the second key to obtain a decrypted digest, the method further comprises:
determining whether the digest of the read upgrade data is consistent with the decrypted digest; and
if the digest of the read upgrade data is inconsistent with the decrypted digest, determining, by the device, that the upgrade data is tampered.

22. The method according to any one of claims 16 to 21, wherein the first storage space comprises any one of the following items:
a first-type storage space, a second-type storage space, and a third-type storage space,
wherein the first-type storage space is a storage space that is hidden to a device other than the device;
the second-type storage space is an internal storage space of a secure chip; and
the third-type storage space is a storage space of a write-once dedicated component that disallows modification of data after the data is written.

23. The method according to any one of claims 16 to 22, wherein the device running data comprises a software package and/or a configuration file.

24. The method according to any one of claims 19 to 22, wherein the upgrade data comprises an upgrade software package and/or a configuration file.

25. An encryption processing apparatus, wherein the encryption processing apparatus is disposed in a device and comprises:
a generating unit, configured to generate a key pair by itself, wherein the key pair comprises a first key used for encryption and a second key used for decryption, and store the key pair in a first storage space which is in the device and does not provide external access;
a digest acquiring unit, configured to perform digest calculation on device running data to obtain a digest of the device running data, wherein the device running data is stored in a second storage space of the device; and
an encrypting unit, configured to read the first key from the first storage space, and encrypt the digest of the device running data with the first key to obtain a first digital signature.

26. The apparatus according to claim 25, wherein the encrypting unit is further configured to:
store the first digital signature in the second storage space.

27. The apparatus according to claim 25 or 26, wherein the generating unit is specifically configured to:
generate the key pair automatically according to at least one of key seeds, wherein
the key seed comprises:
an electronic serial number ESN, a random number generated by the device itself, and current system time.

28. The apparatus according to any one of claims 25 to 27, wherein the first storage space comprises any one of the following items:
a first-type storage space, a second-type storage space, and a third-type storage space,
wherein the first-type storage space is a storage space that is hidden to a device other than the device;
the second-type storage space is an internal storage space of a secure chip; and
the third-type storage space is a storage space of a write-once dedicated component that disallows modification of data after the data is written.

29. The apparatus according to any one of claims 25 to 28, further comprising:
a decrypting unit, configured to read the device running data and the first digital signature from the second storage space; perform digest calculation on the device running data to obtain a digest of the read device running data; and read the second key from the first storage space, and decrypt the first digital signature with the second key to obtain a decrypted digest.

30. The apparatus according to claim 29, further comprising:
a check processing unit, configured to determine whether the digest of the read device running data is consistent with the decrypted digest, wherein if the digest of the read device running data is consistent with the decrypted digest, the device determines that the device running data is not tampered.

31. The apparatus according to claim 29, further comprising:
a check processing unit, configured to determine whether the digest of the read device running data is consistent with the decrypted digest, wherein if the digest of the read device running data is inconsistent with the decrypted digest, the device determines that the device running data is tampered.

32. The apparatus according to any one of claims 25 to 31, wherein:
the generating unit is further configured to download upgrade data from an upgrade platform, and store the upgrade data in the second storage space;
the digest acquiring unit is further configured to perform digest calculation on the upgrade data to obtain a digest of the upgrade data; and
the encrypting unit is further configured to read the first key from the first storage space, and encrypt the digest of the upgrade data with the first key to obtain a second digital signature.

33. The apparatus according to claim 32, wherein the encrypting unit is further configured to:
store the second digital signature in the second storage space.

34. The apparatus according to claim 32 or 33, wherein the decrypting unit is further configured to:
read the upgrade data and the second digital signature from the second storage space, perform digest calculation on the upgrade data to obtain a digest of the read upgrade data, read the second key from the first storage space, and decrypt the second digital signature with the second key to obtain a decrypted digest.

35. The apparatus according to claim 34, wherein the check processing unit is further configured to:
determine whether the digest of the read upgrade data is consistent with the decrypted digest, wherein
if the digest of the read upgrade data is consistent with the decrypted digest, the device determines that the upgrade data is not tampered.

36. The apparatus according to claim 34, wherein the check processing unit is further configured to:
determine whether the digest of the read upgrade data is consistent with the decrypted digest, wherein
if the digest of the read upgrade data is inconsistent with the decrypted digest, the device determines that the upgrade data is tampered.

37. The apparatus according to any one of claims 25 to 36, wherein the first key and the second key are a symmetric key pair or an asymmetric key pair.

38. The apparatus according to any one of claims 25 to 37, wherein the device running data comprises a software package and/or a configuration file.

39. The apparatus according to any one of claims 32 to 37, wherein the upgrade data comprises an upgrade software package and/or a configuration file.

40. A decryption processing apparatus, wherein: the decryption processing apparatus is disposed in a device; the device comprises a first storage space and a second storage space; the first storage space is a space that does not provide external access;
the first storage space is used to store a key pair, wherein the key pair is generated by the device itself, and the key pair comprises a first key used for encryption and a second key used for decryption;
the second storage space is used to store data and a digital signature, wherein the data comprises device running data, and the digital signature comprises a first digital signature which is obtained by the device by encrypting a digest of the device running data with the first key; and
the apparatus comprises:
a reading unit, configured to read the device running data and the first digital signature from the second storage space;
a digest acquiring unit, configured to perform digest calculation on the device running data to obtain a digest of the device running data; and
a decrypting unit, configured to read the second key from the first storage space, and decrypt the first digital signature with the second key to obtain a decrypted digest.

41. The apparatus according to claim 40, further comprising: a check processing unit, configured to:
determine whether the digest of the device running data is consistent with the decrypted digest; and
if the digest of the device running data is consistent with the decrypted digest, determine that the device running data is not tampered.

42. The apparatus according to claim 40, further comprising: a check processing unit, configured to:
determine whether the digest of the device running data is consistent with the decrypted digest; and
if the digest of the device running data is inconsistent with the decrypted digest, determine that the device running data is tampered.

43. The apparatus according to any one of claims 40 to 42, wherein: the data further comprises upgrade data downloaded from an upgrade platform; the digital signature further comprises a second digital signature;
the reading unit is further configured to read the upgrade data and the second digital signature from the second storage space, wherein the second digital signature is obtained by the device by encrypting a digest of the upgrade data with the first key;
the digest acquiring unit is further configured to perform digest calculation on the upgrade data to obtain the digest of the read upgrade data; and
the decrypting unit is further configured to read the second key from the first storage space, and decrypt the second digital signature with the second key to obtain a decrypted digest.

44. The apparatus according to claim 43, wherein the check processing unit is further configured to:
determine whether the digest of the read upgrade data is consistent with the decrypted digest; and
if the digest of the read upgrade data is consistent with the decrypted digest, determine that the upgrade data is not tampered.

45. The apparatus according to claim 43, wherein the check processing unit is further configured to:
determine whether the digest of the read upgrade data is consistent with the decrypted digest; and
if the digest of the read upgrade data is inconsistent with the decrypted digest, determine that the upgrade data is tampered.

46. The apparatus according to any one of claims 40 to 45, wherein the first storage space comprises any one of the following items:
a first-type storage space, a second-type storage space, and a third-type storage space,
wherein the first-type storage space is a storage space that is hidden to a device other than the device;
the second-type storage space is an internal storage space of a secure chip; and
the third-type storage space is a storage space of a write-once dedicated component that disallows modification of data after the data is written.

47. A device, comprising a processor and a storage, wherein: the storage comprises a first storage space and a second storage space, wherein the first storage space is a storage space that does not provide external access; and
the processor is configured to: generate a key pair by itself, wherein the key pair comprises a first key used for encryption and a second key used for decryption; store the key pair in the first storage space; perform digest calculation on device running data to obtain a digest of the device running data, wherein the device running data is stored in the second storage space; read the first key from the first storage space; and encrypt the digest of the device running data with the first key to obtain a first digital signature.

48. The device according to claim 47, wherein the processor is further configured to store the first digital signature in the second storage space.

49. The device according to claim 47 or 48, wherein the processor is specifically configured to:
generate the key pair automatically according to at least one of key seeds, wherein
the key seed comprises:
an electronic serial number ESN, a random number generated by the device itself, and current system time.

50. The device according to any one of claims 47 to 49, wherein the first storage space comprises any one of the following items:
a first-type storage space, a second-type storage space, and a third-type storage space,
wherein the first-type storage space is a storage space that is hidden to a device other than the device;
the second-type storage space is an internal storage space of a secure chip; and
the third-type storage space is a storage space of a write-once dedicated component that disallows modification of data after the data is written.

51. The device according to any one of claims 47 to 50, wherein the processor is further configured to:
read the device running data and the first digital signature from the second storage space; and
perform digest calculation on the device running data to obtain the digest of the read device running data, read the second key from the first storage space, and decrypt the first digital signature with the second key to obtain a decrypted digest.

52. The device according to claim 51, wherein the processor is further configured to:
determine whether the digest of the read device running data is consistent with the decrypted digest; and
if the digest of the read device running data is consistent with the decrypted digest, determine that the device running data is not tampered.

53. The device according to claim 51, wherein the processor is further configured to:
determine whether the digest of the read device running data is consistent with the decrypted digest; and
if the digest of the read device running data is inconsistent with the decrypted digest, determine that the device running data is tampered.

54. The device according to any one of claims 47 to 53, wherein the processor is further configured to:
download upgrade data from an upgrade platform, and store the upgrade data in the second storage space;
perform digest calculation on the upgrade data to obtain a digest of the upgrade data; and
read the first key from the first storage space, and encrypt the digest of the upgrade data with the first key to obtain a second digital signature.

55. The device according to claim 54, wherein the processor is further configured to:
store the second digital signature in the second storage space.

56. The device according to claim 54 or 55, wherein the processor is further configured to:
read the upgrade data and the second digital signature from the second storage space; and
perform digest calculation on the upgrade data to obtain the digest of the read upgrade data, read the second key from the first storage space, and decrypt the second digital signature with the second key to obtain a decrypted digest.

57. The device according to claim 56, wherein the processor is further configured to:
determine whether the digest of the read upgrade data is consistent with the decrypted digest; and
if the digest of the read upgrade data is consistent with the decrypted digest, determine that the upgrade data is not tampered.

58. The device according to claim 56, wherein the processor is further configured to:
determine whether the digest of the read upgrade data is consistent with the decrypted digest; and
if the digest of the read upgrade data is inconsistent with the decrypted digest, determine that the upgrade data is tampered.

59. The device according to any one of claims 47 to 58, wherein the first key and the second key are a symmetric key pair or an asymmetric key pair.

60. The device according to any one of claims 47 to 59, wherein the device running data comprises a software package and/or a configuration file.

61. The device according to any one of claims 53 to 59, wherein the upgrade data comprises an upgrade software package and/or a configuration file.

62. A device, comprising a processor and a storage, wherein: the storage comprises a first storage space and a second storage space, wherein the first storage space is a storage space that does not provide external access;
the first storage space is used to store a key pair, wherein the key pair is generated by the device itself, and the key pair comprises a first key used for encryption and a second key used for decryption; and
the second storage space is used to store data and a digital signature, wherein the data comprises device running data, and the digital signature comprises a first digital signature which is obtained by the device by encrypting a digest of the device running data with the first key; and
the processor is configured to read the device running data and the first digital signature from the second storage space, perform digest calculation on the device running data to obtain a digest of the device running data, read the second key from the first storage space, and decrypt the first digital signature with the second key to obtain a decrypted digest.

63. The device according to claim 62, wherein the processor is further configured to:
determine whether the digest of the device running data is consistent with the decrypted digest; and
if the digest of the device running data is consistent with the decrypted digest, determine that the device running data is not tampered.

64. The device according to claim 62, wherein the processor is further configured to:
determine whether the digest of the device running data is consistent with the decrypted digest; and
if the digest of the device running data is inconsistent with the decrypted digest, determine that the device running data is tampered.

65. The device according to any one of claims 62 to 64, wherein, the data further comprises upgrade data downloaded from an upgrade platform; the digital signature further comprises a second digital signature; and the processor is further configured to:
read the upgrade data and the second digital signature from the second storage space, wherein the second digital signature is obtained by the device by encrypting a digest of the upgrade data with the first key; and
perform digest calculation on the upgrade data to obtain the digest of the read upgrade data, read the second key from the first storage space, and decrypt the second digital signature with the second key to obtain a decrypted digest.

66. The device according to claim 65, wherein the processor is further configured to:
determine whether the digest of the read upgrade data is consistent with the decrypted digest; and
if the digest of the read upgrade data is consistent with the decrypted digest, determine that the upgrade data is not tampered.

67. The device according to claim 65, wherein the processor is further configured to:
determine whether the digest of the read upgrade data is consistent with the decrypted digest; and
if the digest of the read upgrade data is inconsistent with the decrypted digest, determine that the upgrade data is tampered.

68. The device according to any one of claims 62 to 67, wherein the first storage space comprises any one of the following items:
a first-type storage space, a second-type storage space, and a third-type storage space,
wherein the first-type storage space is a storage space that is hidden to a device other than the device;
the second-type storage space is an internal storage space of a secure chip; and
the third-type storage space is a storage space of a write-once dedicated component that disallows modification of data after the data is written.

69. The device according to any one of claims 62 to 68, wherein the device running data comprises a software package and/or a configuration file.

70. The device according to any one of claims 65 to 68, wherein the upgrade data comprises an upgrade software package and/or a configuration file.
